# EUROPEAN PATENT APPLICATION

(11) **EP 0 666 693 A1**
(43) Date of publication of application: **09.08.1995**
(21) Application number: 95200190.7
(22) Date of filing: 27.01.1995
(51) Int. Cl.: H04N 7/15, H04N 7/14

(54) **Videophone system**

(30) Priority: 04.02.1994 NL 9400175
(71) Applicant: Koninklijke PTT Nederland N.V., NL-2509 CH The Hague (NL)
(72) Inventor: Meijer, Robert Johan, NL-9603 DK Hoogezand (NL); Boonstra, Albert Louis, NL-9497 PD Donderen (NL)

(57) **Abstract**

Videophony system which can be operated by the keyboard or mouse of a PC workstation, the latter, and possibly further operating means, being used jointly, but further system devices of the workstation and the videophony system, such as the processing devices and display screens, being physically and operationally separated from one another.

Joint use of the operating means is ergonomically attractive, problems being avoided by integration of the two systems.

## Description

### A BACKGROUND OF THE INVENTION

The invention relates to a videophony system comprising a processing device, an I/O device for images and a I/O device for sound, and moreover, operating means and a transmission interface. Such a system is generally known. This type of system functions completely independently and is capable of communicating with similar videophony systems via, for example, an ISDN transmission system.

Another type of videophony system which is generally known is formed by a computer workstation, for example a PC, in which as many as possible of the various devices needed for videophony are accommodated in said workstation itself, for example in the form of plug-in cards. Thus, the display screen, the keyboard and possibly mouse, and also parts of the processing device are used jointly, that is to say processor and memory capacity is occupied.

After the introduction of "stand-alone" videophony systems referred to in the first paragraph, there is currently a trend to integrate videophony systems completely in computer workstations, as indicated above. Although complete integration of videophone and workstation appears more attractive than the option of the separate systems, it is beset with a number of disadvantages which are not unimportant. Thus, additional plug-in cards have to be provided and installed, often in workstations which are already in use. In practice that often results in problems since it relates to different types and makes of workstations which may be configured completely differently. As a rule, the videophony cards then also have to be installed by experts, care always having to be taken that the system has to function perfectly and in the same way before and after the "intervention". As a supplier of a videophony system, it is unattractive per se from a practical and marketing point of view to have to open and adapt ("operate on") the client's equipment. In addition, it must actually be possible to be able to install the necessary hardware and software (number of expansion slots, interrupts in use and the like, resident programs already present, available memory space, etc.). In current practice, all this costs a lot of time and money and success is not ensured beforehand.

### B SUMMARY OF THE INVENTION

The Applicant has realized that, in view of the many problems, complete integration is not the correct way of installing videophony systems. The Applicant therefore proposes a hybrid system in which only the operating means are common and in which the further devices function in a "stand-alone" manner, as a result of which the abovementioned problems do not have to be overcome, while an important ergonomic advantage is in fact achieved. In the view of the Applicant, all this will therefore result in a better introduction of videophony and, at the same time, in a better pricing than that of integrated or of stand-alone systems. The invention provides that the operating means of the videophony system are formed by operating means of a computer workstation, such as a PC, which are connected via an I/O port of said computer workstation to an I/O port of the processing device of the videophony system and, apart from the operating means, which are thus used jointly, the remainder of the videophony system is separated from the computer workstation. Both the vision (and sound) processing hardware and vision (and sound) processing software are thus located outside the workstation, while the vision (and sound) input/output devices are also located outside the workstation (in integrated systems, only the "vision input device", the camera, is located outside the workstation since it does not form a standard component of a workstation; as a rule, this also applies to the "sound I/O device", the telemicrophone). According to the invention, the operating means of the workstation, the keyboard and the mouse (or even voice-control device) are therefore used not only for the workstation but also for operating the videophony system. From an ergonomic point of view, it is attractive to give the keyboard and the mouse (and possibly voice-control device), in particular, a "multifunctional" function (the operation of both the workstation and the videophony system), whereas integration of the processing devices causes more trouble than it is worth. Integration of, in particular, the vision I/O devices, such as display screens, also imposes a disadvantage rather than an advantage. In order to achieve all this, most of the processing hardware and processing software has nevertheless to be integrated, with the problems thereof which have been mentioned, whereas it is often found in practice to be more of a(n ergonomic) drawback that the image of the person to whom a videophony call is made occupies a part of the display screen since the view of that part of the display screen is then blocked by said image, which is inconvenient, for example, if use has to be made of the (for example, alphanumerical or graphical) display-screen information during such a (video) telephone call. In practice, it certainly does not even seem to be a disadvantage to make use of a separate telephone display screen. Such a display screen may be, for example, a (small) LCD screen which is provided above or next to the workstation display screen. In addition, a problem can then be eliminated which is not readily' possible in the case of the integrated options, namely the use of a special, parallax-free I/O device provided with, for example, a semitransparent mirror which will be disclosed in the description of an exemplary embodiment. Another form of a special I/O device for video telephony is the so-called "video wall", a large-screen display medium which can be used, in particular, in "video conferencing".

The insight on which the invention disclosed above is based and the measures emerging therefrom do not have to remain restricted, in principle, to the combination of workstation and videophony system but may logically comprise, in its generality, a(nother) multimedia or multitasking system, in which case, just as is the case in the combination of workstation and videophony system, complete integration of the subsystems may in practice present problems, while the ergonomic advantages are in fact minimal for which purpose, according to the invention, only the operating means are common and the subsystems furthermore function independently of one another.

### C EXEMPLARY EMBODIMENT

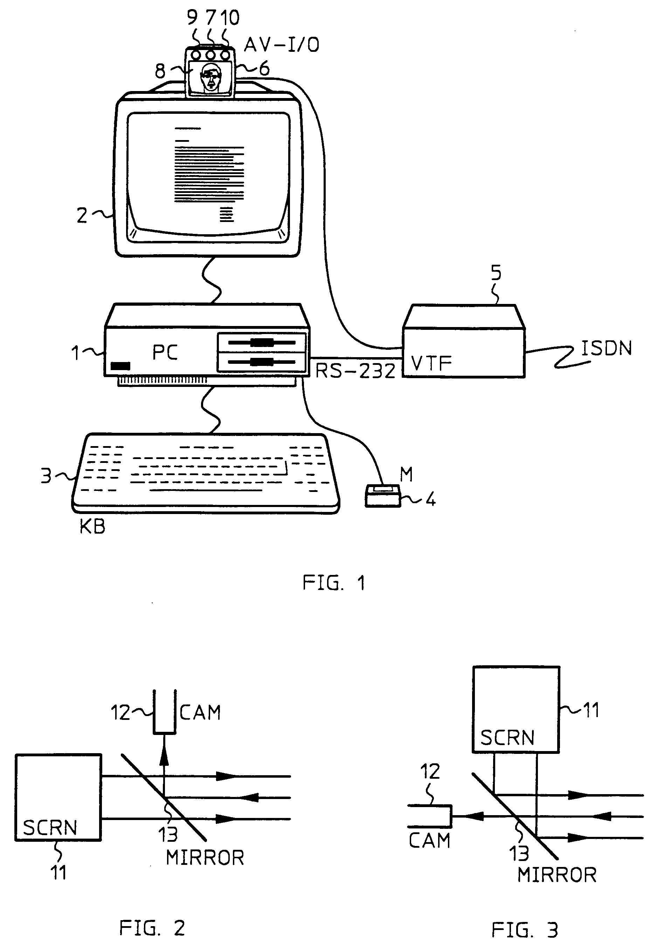

Fig. 1 shows an exemplary embodiment of a videophony system according to the invention; Fig. 2 shows a first exemplary embodiment of a parallax-free vision I/O device and Fig. 3 a second exemplary embodiment thereof.

The system shown in Fig. 1 comprises a PC workstation formed by a processing system 1 (the "system box") to which there are connected a display screen 2 for displaying alphanumerical and graphical images and, if it is a "multimedia" PC, also video images, a keyboard 3 and a mouse 4, as well as a videophony system comprising a processing system 5, including an ISDN interface, and an audiovisual I/O device 6, comprising a video camera 7, a small display screen 8, a microphone 9 and a loudspeaker 10. The operation of the PC workstation does not have to be dealt with since it can be any desired PC. However, some (resident) software has to be loaded in order to transmit the subsequently entered input of the keyboard 3 or mouse 4 to the processing device 5 of the videophony system via an RS-232 connection, for example after pressing a particular (function) key or key combination (or via the "clicking" of a "telephone" option in a window-type screen interface by means of the mouse). The operation of the processing device 5 does not need to be dealt with in detail either, since it receives, decodes and transmits to the audiovisual I/O device 6 audiovisual signals in a standard manner from the ISDN network connected and, conversely, encodes audiovisual signals from said I/O device 6 and transmits them to the ISDN network. The processing device 5 is therefore operated from the keyboard 3, that is to say the initiation of a call, the answering of a call and the termination of a call are implemented by means of the keyboard (or the mouse) (for which purpose, the keyboard is then simply set, as stated, to the "telephone mode" by means of a (function) key or key combination or via a mouse operation).

The PC can otherwise be operated normally (after the keyboard has again been set to its standard mode from the "telephone mode"), even if a telephone call is on-line at the same time and a call is therefore taking place via the videophone.

The parallax-free I/O device which is shown in Fig. 2 and which is connected to the processing device 5 of the videophony system comprises a display screen 11, a camera 12 and a semitransparent mirror 13. The display screen 11 and the camera 12 are perpendicular to one another. The mirror 13 is semitransparent in such a way that incident images are reflected in the direction of the camera 12, whereas images displayed by the display screen are transmitted in the forward direction by' the same mirror 13. In the I/O device shown in Fig. 3, the position of the display screen 11 and the camera 12 is interchanged, while the mirror 13 is also reversed, as a result of which the incident images are transmitted directly to the camera 12 and the images displayed by the display screen 11 are reflected via the mirror 13. Both I/O devices are parallax-free, and this achieves the result that the subscribers at both ends of the videophone call can look straight at one another.

## Claims

1. Videophony system comprising a processing device, an I/O device for images and an I/O device for sound, and moreover, operating means and a transmission interface, characterized in that the operating means of the videophony system are formed by operating means of a computer workstation, such as a PC, which are connected via an I/O port of said computer workstation to an I/O port of the processing device of the videophony system and, apart from the operating means, which are thus used jointly, the remainder of the videophony system is separated from the computer workstation.

2. Input/output device for an image processing system, comprising an image pick-up device and an image display device, characterized in that the image pick-up device and the image display device are sited in such a way that the directional axes of their operating regions are substantially antiparallel to one another and in that, at or in the immediate vicinity of the crossover point of said directional axes, a semitransparent mirror is arranged which transmits images displayed by the image display device and which reflects images to be picked up by the image pick-up device in the direction of said image pick-up device or which, conversely, transmits images to be picked up by the image pick-up device and which reflects images displayed by the image display device.

3. Multimedia system comprising, for each media type, a processing device to which there are connected one or more input devices or output devices for accepting or displaying information of the respective media type, and also operating means, the operating means of all the processing devices being formed by operating means which are connected to one of said processing devices and which are connected via I/O ports of said one processing device to I/O ports of the remaining processing devices and, apart from the operating means, which are thus used jointly, the remaining devices of the multimedia system being separated from one another.

4. Multitasking system, comprising various processing devices, to each of which there are connected one or more input devices or output devices for accepting or displaying information, and also operating means for operating the various processing devices, the operating means of all the processing devices being formed by operating means which are connected to one of the processing devices mentioned and said operating means being connected via I/O ports of said one processing device to I/O ports of the other processing devices and, apart from the operating means, which are thus used jointly, the other devices of the multitasking system being separated from one another.
